# EUROPEAN PATENT SPECIFICATION

(11) **EP 1 492 996 B1**
(45) Date of publication and mention of the grant of the patent: **12.03.2014**
(21) Application number: 03708805.1
(22) Date of filing: 19.03.2003
(51) Int. Cl.: H01L 27/14, H04N 5/335, H04N 13/00, G01B 11/24, G01B 11/04

(54) **ARRANGEMENT IN A MEASURING SYSTEM**
ANORDNUNG IN EINEM MESSSYSTEM
ARRANGEMENT D'UN SYSTEME DE MESURE

(30) Priority: 05.04.2002 SE 0201044
(43) Date of publication of application: 05.01.2005
(73) Proprietor: Sick IVP AB, 583 35 Linköping (SE)
(72) Inventor: JOHANNESSON, Mattias, S-585 93 Linköping (SE); MURHED, Anders, S-582 46 Linköping (SE)
(74) Representative: Hammond, Andrew David
(86) International application number: PCT/SE2003/000461
(87) International publication number: WO 2003/087713

(56) References cited:
- EP-A1- 1 154 633
- EP-A2- 1 096 785
- EP-B1- 0 840 880
- WO-A1-00/42381
- WO-A1-01/50760
- US-A- 5 796 095
- US-A- 6 122 046
- US-A1- 2002 039 436
- US-B1- 6 320 618

## Description

### TECHNICAL FIELD

The present invention relates in general to a sensor and a system for imaging characteristics of an object and relates in particular to a sensor and system for imaging multiple characteristics of an object with different degrees of resolution.

### PRIOR ART

Conventional imaging sensors of the charge coupled device (CCD) and complementary metal oxide semiconductor (CMOS) type have an NxM matrix (array) with photodiodes, which absorb electromagnetic radiation and convert this into electrical signals.

There is often a requirement for imaging multiple characteristics of the same object, such as various three-dimensional (3D) and two-dimensional (20) characteristics. In the 3D image geometrical characteristics such as width, height, volume etc. of the object are imaged. In the 2D image characteristics such as cracks, structural orientation, position and identity are imaged, for example, through marks, bar code or matrix code. Intensity information in the 2D image is usually imaged in grey scale, but imaging the 2D image in colour, that is to say registering R (red), G (green) and B (blue) components, for example, by means of filters or light wavelengths is also common.

A matrix array picture processor (MAPP sensor) is used for imaging different characteristics of the same object using the same sensor, so-called multisensing, by using a part of the sensor for laser profiling (3D measurement) and individual sensor rows for reading out intensity Information (2D measurement). An advantage in using one sensor to image multiple characteristics is that the cost and complexity of the system are less than when using one sensor for the 3D measurement and another sensor for the 2D measurement, for example.

In multisensing, the same resolution is nowadays used for lateral measurement both in the 2D measurement and in the 3D measurement. It is usual, however, to require a higher resolution on the 2D image than on the 3D image. The reason for this is the desire to be able to measure finer detail in the image than is required in measurement of the shape. An example of this is timber inspection, where it is often more important to measure cracks and surface structure with a higher resolution than the geometric shape.

Examples of imaging sensors which have different degrees of resolution are shown in Allreza Molni "Vision chips", Kluwer Academic Publishers, page 143-146, 2000, in which image sensors are constructed as an electronic eye, that is to say they have a high resolution in the centre and a low resolution at the periphery. The pixel geometry in these "eyes" is linear-polar or log-polar. If the "eye" sees something interesting at its periphery with a low resolution, the system can control the sensor so that it directs its high-resolution centre part to the area In order to read the details. This type of sensor is very well suited for robot applications. An example of such an electronic eye is also shown in US 5,166,511.

U.S. Patent No. 6,122,046 discloses an optical inspection system for inspecting a substrate and includes a light detector, a light source, a deflection system, an objective lens and an optical system. The light source produces an illuminating beam directed along a path to the substrate. The deflection system scans the illuminating beam on a scan line of the substrate. The objective lens focuses the illuminating beam on the substrate and collects light reflected therefrom. The collected beam is angularly wider than the illuminating beam. The optical system directs the collected light beam along a path at least partially different than the path of the illuminating beam and focuses the collected beam on the light detector. In one embodiment, the system additionally includes at least one dark field detector for collecting light deflected from the substrate.

WO 00/42381 A1 discloses a method for contactless inspection of objects on a substrate, by means of an inspection device during relative motion between the substrate and the inspection device. The method comprises the steps of: generating a first image comprising object height information by illuminating at least a portion of the substrate comprising one or more objects by means of first radiation means and imaging at least one of the one or more objects illuminated by the first radiation means onto a two-dimensional matrix sensor means having a portionwise addressable matrix of pixel elements; generating a second image comprising object area information by illuminating at least a portion of the substrate comprising one or more objects by means of second radiation means and imaging at least one of the one or more objects illuminated by the second radiation means onto the sensor means; extracting the object height information, by means of the sensor means, from the first image; and extracting the object area information, by means of the sensor means, from the second image.

European Patent EP 0 840 880 discloses a scanning apparatus and method for generating computer models of three dimensional objects comprising means for scanning the object to capture data from a plurality of points on the surface of the object so that the scanning means may capture data from two or more points simultaneously; sensing the position of the scanning means; generating intermediate data structures from the data; combining intermediate data structures to provide the model; display; and for manually operating the scanning apparatus. The signal generated is structured light in the form of stripe or area from illumination sources such as a laser diode or bulbs which enable data for the position and colour of the surface to be determined. The object is preferably widely illuminated with a reflecting means for each bulb to provide a more uniform light intensity and a diffusing means and/or polarising means. The position sensing means may be a multiply jointed arm or a remote position sensing means. The object may be on a turntable and may be viewed in real time as rendered polygons on a monitor as the object is scanned.

U.S. Patent No. 5,796,095 discloses an optical apparatus including area sensors which are made to differ in picture element pitch between the central portions and the marginal portions thereof (the marginal portions are made to have a coarse picture element pitch since it is not very meaningful even if the picture element pitch is made fine because the performance of an optical system is limited, and the central portions are made to have a dense picture element pitch) and the changeover of the respective picture elements is electronically effected by reading-out means so that two kinds of object field information (detailed information and coarse information) may be obtained from the area sensors.

European Patent EP 1 096 785 discloses a photosensor array having at least one row of photosensors with a first sensor size, and at least one row of photosensors with a second sensor size, with the two sizes being different. In a first example embodiment, each sensor in a row of sensors for white light (206, has a smaller area than the sensors in other rows. For the first embodiment, the native input sampling rate for luminance is greater than the native input sampling rate for color information. In a second example embodiment, for every band of wavelengths being sensed, there are two rows of sensors, with one row having relatively small sensor areas and the other row having relatively large sensor areas.; In the second example embodiment, the rows with relatively small sensor areas are used for high native input sampling rates, and the rows with relatively large sensor areas are used for high color accuracy.

Another example of an imaging sensor which has different degrees of resolution is shown In US 6,320,618, in which an array matrix-type sensor has been provided with at least one area having a higher resolution than the rest of the sensor. The sensor is placed In a camera, which is mounted on a vehicle as a part of an automatic navigation system, which controls functions of the vehicle, for example braking if some obstacle appears in front of the car or steering along the white line at the edge of the road. The sensor is arranged to pick up remote information with a high resolution and information in proximity to the vehicle with a low resolution.

### SUMMARY OF THE INVENTION

An object of the present invention is to provide a sensor and a system which image the characteristics of an object with different degrees of resolution. This has been achieved by a system having the characteristics specified in the characterising part of claim 1.

One of the advantages to the use of a sensor and a system which read in multiple characteristics images with different degrees of resolution is that a simpler, cheaper and more compact solution is obtained than with previously known solutions. A system according to the invention furthermore requires fewer system components such as cameras, lenses etc.

According to one embodiment of the present Invention the sensor comprises two integral areas with pixels which are arranged substantially parallel, side by side In a transverse direction.

According to a further embodiment of the invention the two pixel areas/units share read-out logic, which means that they have the same output register.

According to an alternative embodiment of the invention the two pixel areas/units are each read out on different output registers, which means that it is possible to read out the information contained In the two areas/units simultaneously. One advantage to this is that it obtains greater freedom with regard to exposure times. Another advantage is that it obtains greater freedom with regard to degrees of resolution in both the transverse direction and the longitudinal direction.

### BRIEF DESCRIPTION OF THE DRAWINGS

The invention will now be explained In more detail on the basis of examples of embodiments and with reference to the drawings attached in which:
- Fig 1: shows a perspective view of a measuring system according to the present invention;
- Fig 2: shows a three-dimensional profile and intensity profile of an object imaged on the sensor;
- Fig 3: shows a first embodiment of a sensor according to the invention;
- Fig 4: shows a second embodiment of a sensor according to the invention;
- Fig 5: shows an alternative embodiment of a sensor (not claimed) wherein the two areas with pixels are designed as two separate units, which are arranged substantially parallel, side by side in a transverse direction;
- Fig 6: illustrates a fundamental system setup according to a first embodiment;
- Fig 7: illustrates a fundamental system setup according to a second embodiment.

### DETAILED DESCRIPTION OF EMBODIMENTS

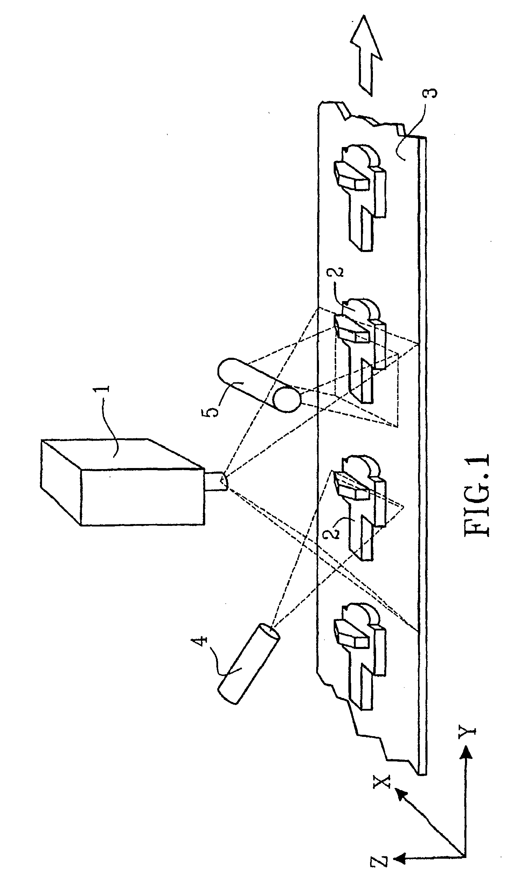

Figure 1 shows a system for reading in characteristics of an object. The system comprises a camera 1, which may be an MAPP camera, a CCD camera, a CMOS camera or any other camera suitable for imaging characteristics of an object. The system further comprises an object 2, the characteristic-dependent parameters of which are to be measured by the system, placed on a base 3 together with two light sources 4 and 5 arranged to illuminate the object 2. The light sources 4, 5 generate, for example, substantially point light, substantially linear light or light composed of multiple, substantially point or linear segments and may be of any type suited to the application, for example lasers, LED's, ordinary light (light bulb) etc, but these are familiar to the person skilled in the art and will not be further described here.

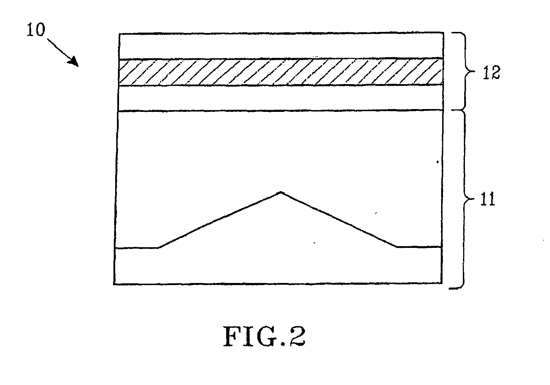

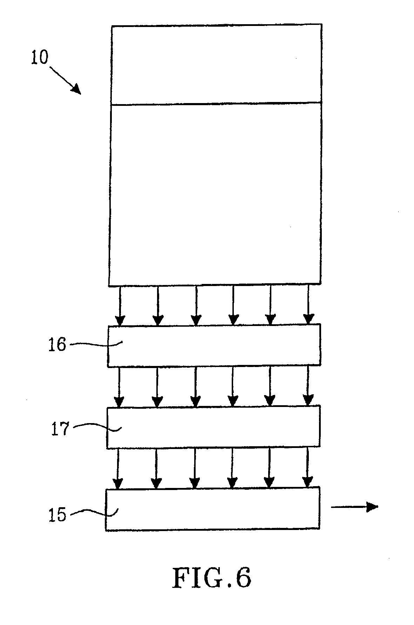

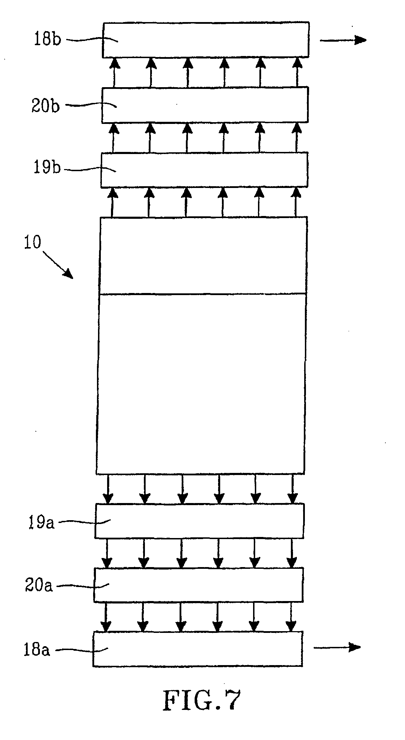

The camera 1 comprises, among other things, a sensor 10, which is shown in Figures 2 to 5 and is described in more detail below, light-gathering optics and control logic (not shown). The rays reflected from the object 2 are picked up by the sensor 10 and are converted there Into electrical charges, which are in turn converted into analog or digital electrical signals. In the preferred embodiment these signals are then transferred via an output register (shown in Figures 6 and 7) to an image/signal-processing unit (not shown) to be analysed and processed.

The object 2, which as stated above, has been placed on the base 3, which in a preferred embodiment moves relative to the measuring system indicated by an arrow in the figure. Instead of the base 3 moving relative to the measuring system, the relationship may naturally be reversed, that is to say the object 3 is fixed and the measuring system moves over the object 2 when measuring. The base 3 may be a conveyor belt, for example, or alternatively there is no base and the object itself moves, if the said object is paper, for example, in a continuous web in a paper-making machine.

In an alternative embodiment (not shown), one or more of the light sources is located below the base 3 and shines through the object 2, which means that the sensor 10 picks up transmitted rays which have passed through the object 2, and not reflected rays.

In Figure 1 the direction of movement is indicated by an arrow. This direction will be referred to in this document as the longitudinal direction, that is to say Y in the system of coordinates drawn into the figure. The transverse direction (X in the system of coordinates) lies perpendicular to the longitudinal direction. In measuring there is a transverse and a longitudinal resolution. The longitudinal resolution depends on how frequently the object 2 is read off (sampled). The present invention is primarily concerned with the transverse resolution, which largely depends on the number of pixels which the sensor 10 has in a row.

The sensor 10 (shown In Figures 2 to 5) is an array sensor and has a first area 11 with NxM pixels (where N is rows and M is columns) combined with a second high-resolution area 12 with N'xM' pixels, where M'=Mxb (b is an Integer >1). The first area 11 is used for 3D measurement by triangulation, that is to say imaged geometric characteristics of the object 2 such as width, height, volume etc. In 3D measurement, the intensity image is reduced from k rows, k>1, to the position values that correspond to where the light strikes the sensor in each column. The result is a profile with three-dimensional information for each sample of k rows. The second area 12 is used For 2D measurement (intensity information), that is to say In imaged characteristics of the object 2 such as cracks, structural orientation, position etc. If N' ≥ 2, there is a possibility of applying colour filters (for example, RGB) to the individual pixels and In this way obtaining a colour read-out of 2D data.

Figure 2 shows a 3D profile of the object 2 in the first area 11 and a grey scale/colour Image of the object 2 in the second area 12. The object 2 is scanned profile by profile as the object 2 passes the measuring system and the result is accordingly a three-dimensional and a two-dimensional imaging of the object 2.

In the preferred embodiment an MAPP sensor is used, but the person skilled In the art will appreciate that the invention may be applied to other types of sensors, such as CCD sensors or CMOS sensors, for example.

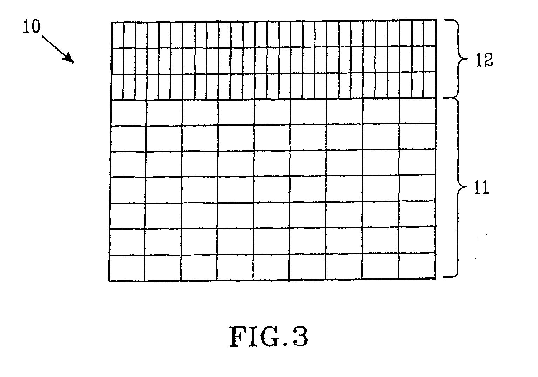

Figure 3 shows a first embodiment of the sensor according to the invention. Here the pixels in the second area 12 are one third the width of the pixels in the first area 11. If there are 512x1536 pixels in the first area 11, for example, the second area 12 then has 16x4608 pixels (b=3), for example. This means that up to 512 rows are used for the 3D measurement and triple resolution intensity components are read out on up to 16 rows.

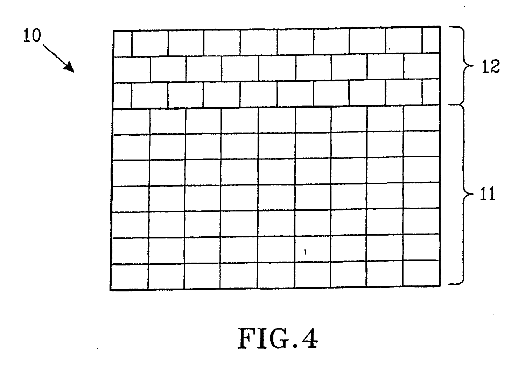

In the embodiment according to Figure 4 every other row in the second high-resolution area 12 is offset half a pixel width in relation to the rows immediately below and above. The second area 12, according to the example for Figure 3, then has 8x3072 double rows of pixels (b=2), in which a double row consists of two single rows and one row is offset by half a pixel width. This means that In the embodiment according to Figure 4 up to 512 rows are used for 3D measurement and up to 8 different double-resolution intensity components are read out.

The person skilled in the art will appreciate that the invention is not limited to the embodiments shown in Figures 3 and 4. There is an almost infinite number of variants of how the pixels can be formed in the high-resolution second area 12. For example, the pixels may be half the width of those in the first area 11, or also at the same time twice as high etc. Other variants of the embodiment according to Figure 4 may involve the pixels being offset by a third or a quarter of the pixel width. With regard to this, see also US 4,204,230, which shows offset pixel rows for increasing the resolution of an imaging sensor.

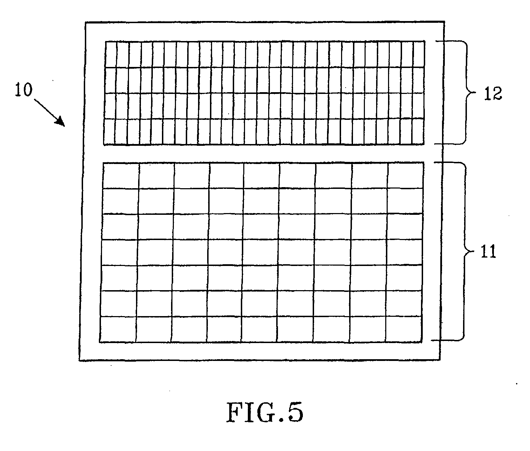

According to Figures 3 and 4 the first area 11 and the second area 12 lie substantially parallel side by side in direct contact In a longitudinal direction, that it to say the sensor is manufactured as an integral unit. Figure 5 shows a sensor - not claimed - in which the first area 11 and the second area 12 are two separate units lying substantially parallel side by side in the transverse direction, but not In direct contact. In Figures 2 to 5 the second high-resolution area 12 is located longitudinally In front of the first area 11 (illustrated at the top of the figures), but naturally it may equally well be located longitudinally behind the first area 11 (illustrated at the bottom of the figures).

An alternative to designing the pixels offset in relation to one another is to cover the pixels with masks, which are arranged in such a way that illumination of parts of pixels is blocked and an offset sampling pattern is thereby obtained.

A sensor row is read out to an output register, which is M pixels long, shown in Figures 6 and 7. This output register 15, 18a, 18b is either exchanged as raw data or it is coupled to a row-parallel A/D converter and/or signal/image processing unit. In order to read out a Y-wide row, w read-outs must be performed successively. If the output register 15, 18a, 18b has space for b rows, these can be read out/processed together. The read-out can therefore be both analog and digital, but in the preferred embodiment of the present invention (shown in Figure 6), measured data is read out via an A/D converter 16 and a processor 17 to a digital output register 15, before being relayed to an image-processing unit (not shown).

The processor 17 can be programmed to perform many functions, among other things extracting the three-dimensional profile from the intensity image, that is to say each column calculates the position of the lightest point and these values can then be seen as an intensity profile in which the intensity corresponds to distance. Other functions performed by the processor 17 are edge detection, noise reduction etc.

In an alternative embodiment of the invention, shown in Figure 7, the two sensor areas 11, 12 (NxM and N'xM') do not share the read-out logic, that is to say they have different output registers 18a and 18b, which means that other effects are obtained. Information from the two areas 11, 12 can be read out independently of one another with greater freedom of exposure times and degrees of resolution both in the transverse and in the longitudinal direction. Furthermore, M'=Mxb need not apply, it being instead possible to configure the geometries differently, for example a 1536x512 matrix could be combined with a 4096x3 matrix. In a preferred embodiment of the alternative embodiment shown in Figure 7, measured data are read out via A/D converters 19a, 19b and processors 20a, 20b to digital output registers 18a, 18b.

Both of the embodiments according to Figures 6 and 7 are illustrated with A/D converters and processors. These should only be regarded as preferred embodiments. It is quite possible, as briefly mentioned above, to output measured data directly as analog or digital raw data from the output registers.

As stated above, it is possible to use colour filters or coloured light sources (not shown) on the second area 12 of the sensor 10, which means that both grey scale and colour images can be read out with the higher resolution. Which colour filters or coloured light sources are used and how these are placed will be known to the person skilled In the art and will not be described in detail here, but the possible use of Bayer patterns or a filter for each row may be mentioned by way of example. RGB components are commonly chosen, but other colours such as CMY (cyan magenta yellow) may also be used. In the alternative embodiment according to Figure 7, each colour might have its own output register, which gives a faster read-out of each colour profile.

Crosstalk means that light from one measurement interferes with another sensor area, that is to say light from the 3D measurement interferes with the 2D measurement and/or vice-versa. In order to reduce the crosstalk between different sensor areas it is possible to separate the light to these into different wavelengths and to protect different sensor areas with optical filters differing according to wavelength, which block the light or allow it to pass through to the respective sensor area.

In yet another embodiment of the sensor 1 according to the invention time delay integration (TDI) is used on the high-resolution second area 12. TDI means that the charge is moved from one row to another as the object 2 is moved with the base 3, thereby achieving an X-times greater light sensitivity with X TDI stages. By using TDI in the embodiment according to Figure 4, the charge will be moved by two rows per stage since intervening rows are offset by half the pixel width.

## Claims

1. System for measuring characteristic-dependent parameters of an object (2) comprising at least one light source (4,5), which emits light towards the object (2), the characteristics of which are to be imaged, said system comprising means (3) for moving said object in a longitudinal direction relative to said system, said system further comprising a sensor (10) which in turn comprises at least a first area (11) and a second area (12) of pixel elements arranged to absorb electromagnetic radiation from said object (2) and to convert the radiation absorbed into electrical charges, which are in turn converted into electrical signals, wherein the first area (11) and the second area (12) are arranged parallel side by side in direct contact in said longitudinal direction as one integral unit, said first area (11) having a first degree of transversal resolution (M) and being adapted for 3D measurements of said object (2) and said second area (12) having a second degree of transversal resolution (M') and being adapted for 2D measurements of said object (2), said system further comprising an image/signal-processing unit to analyze and process said signals from the first area by triangulation using said at least one light source (4,5) to provide three-dimensional geometric characteristics of the object (2), and said signals from the second area to provide two-dimensional imaged characteristics of said object (2), **characterised in that** said second degree of transversal resolution (M'=Mxb) is higher (b>1) than said first degree of transversal resolution (M).

2. The system according to Claim 1, **characterised in that** at least one of the two areas (11,12) is provided in its entirety or partially with colour filters in order to image the object (2) in colour.

3. The system according to Claims 1 or 2, wherein the first area (11) is designed as a matrix having N rows and M columns, that the second area (12) is designed as a matrix having N' rows and M' columns and that M' is b multiplied by M columns, where b is an integer greater than one.

4. The system according to Claim 3, wherein time delay integration (TDI) is used on the second area (12).

5. The system according to Claim 1, **characterised in that** at least one of the areas (11,12) is provided with filters for different wavelengths in order to minimise crosstalk.

6. The system according to any one of the preceding claims, wherein the system also comprises an output register (15) arranged to read out the charges received In the sensor (10).

7. The system according to any one of claims 1 to 6, wherein the system also comprises at least two output registers (18a, 18b) arranged to read out the charges received in the sensor (10).

8. The system according to Claim 7, wherein the first area (11) and the second area (12) of the sensor (10) are each read out on their own output register (18a, 18b).

9. The system according to Claim 7, wherein if the second area (12) of the sensor is provided with colour filters, each colour picked up has its own output register.

10. The system according to Claim 6 or 7, wherein the system further comprises an A/D converter (16) arranged to convert the electrical charges from an analog to a digital format and that the output register (15, 18a, 18b) Is a digital output register.

11. The system according to any one of the preceding claims, wherein the system also comprises an image/signal processing unit arranged to analyse the electrical charges.

## Patentansprüche

1. System zum Messen merkmalabhängiger Parameter eines Objekts (2), das mindestens eine Lichtquelle (4,5) umfasst, die weißes Licht in Richtung des Objekts (2) emittiert, dessen Merkmale abgebildet werden sollen, wobei das System Mittel (3) umfasst, um das Objekt in einer Längsrichtung relativ zu dem System zu bewegen, wobei das System ferner einen Sensor (10) umfasst, der wiederum mindestens einen ersten Bereich (11) und einen zweiten Bereich (12) von Pixelelementen umfasst, die dazu ausgelegt sind, elektromagnetische Strahlung von dem Objekt (2) zu absorbieren und die absorbierte Strahlung in elektrische Ladungen umzuwandeln, die wiederum in elektrische Signale umgewandelt werden, wobei der erste Bereich (11) und der zweite Bereich (12) parallel Seite an Seite in direktem Kontakt in der Längsrichtung als eine einteilige Einheit angeordnet sind, wobei der erste Bereich (11) einen ersten Grad von transversaler Auflösung (M) besitzt und für 3D-Messungen des Objekts (2) ausgelegt ist und der zweite Bereich (12) einen zweiten Grad von transversaler Auflösung (M') besitzt und für 2D-Messungen des Objekts (2) ausgelegt ist, wobei das System ferner eine Bild-/Signalverarbeitungseinheit umfasst, um die Signale von dem ersten Bereich durch Triangulation mittels der mindestens einen Lichtquelle (4, 5) zu analysieren und zu verarbeiten, um dreidimensionale geometrische Merkmale des Objekts (2) zu liefern, und die Signale aus dem zweiten Bereich zu analysieren und zu verarbeiten, um zweidimensionale abgebildete Merkmale des Objekts (2) zu liefern, **dadurch gekennzeichnet, dass** der zweite Grad der transversalen Auflösung (M' = M × b) höher ist (b > 1) als der erste Grad der transversalen Auflösung (M).

2. System nach Anspruch 1, **dadurch gekennzeichnet, dass** mindestens einer der zwei Bereiche (11, 12) in seiner Gesamtheit oder teilweise mit Farbfiltern versehen ist, um das Objekt (2) in Farbe abzubilden.

3. System nach Anspruch 1 oder 2, wobei der erste Bereich (11) als eine Matrix gestaltet ist, die N Zeilen und M Spalten besitzt, und der zweite Bereich (12) als eine Matrix gestaltet ist, die N' Zeilen und M' Spalten besitzt, und wobei M' gleich b multipliziert mit M Spalten ist, wobei b eine ganze Zahl größer als eins ist.

4. System nach Anspruch 3, wobei bei dem zweiten Bereich eine Zeitverzogerungsintegration (TDI) benutzt wird.

5. System nach Anspruch 1, **dadurch gekennzeichnet, dass** mindestens einer der Bereiche (11, 12) mit Filtern für verschiedene Wellenlängen versehen ist, um ein Übersprechen zu minimieren.

6. System nach einem der vorhergehenden Ansprüche, wobei das System zudem ein Ausgangsregister (15) umfasst, das dazu ausgelegt ist, die Ladungen, die in dem Sensor (10) empfangen werden, auszulesen.

7. System nach einem der Ansprüche 1 bis 6, wobei das System zudem mindestens zwei Ausgangsregister (18a, 18b) umfasst, die dazu ausgelegt sind, die Ladungen, die in dem Sensor (10) empfangen werden, auszulesen.

8. System nach Anspruch 7, wobei der erste Bereich (11) und der zweite Bereich (12) des Sensors (10) jeweils bei ihrem eigenen Ausgangsregister (18a, 18b) ausgelesen werden.

9. System nach Anspruch 7, wobei jede aufgenommene Farbe ihr eigenes Ausgangsregister hat, wenn der zweite Bereich (12) mit Farbfiltern versehen ist.

10. System nach Anspruch 6 oder 7, wobei das System ferner einen A/D-Umsetzer (16) umfasst, der dazu ausgelegt ist, die elektrischen Ladungen von einem analogen in ein digitales Format umzusetzen, und wobei das Ausgangsregister (15, 18a, 18b) ein digitales Ausgangsregister ist.

11. System nach einem der vorhergehenden Ansprüche, wobei das System zudem eine Bild-/Signalverarbeitungseinheit umfasst, die dazu ausgelegt ist, die elektrischen Ladungen zu analysieren.

## Revendications

1. Système destiné à mesurer des paramètres dépendant de caractéristiques d'un objet (2) comprenant au moins une source de lumière (4, 5), qui émet de la lumière vers l'objet (2), dont les caractéristiques sont à imager, ledit système comprenant un moyen (3) permettant de déplacer ledit objet dans une direction longitudinale par rapport audit système, ledit système comprenant en outre un capteur (10) qui comprend lui-même au moins une première aire (11) et une seconde aire (12) d'éléments de pixel agencés pour absorber le rayonnement électromagnétique provenant dudit objet (2) et pour convertir le rayonnement absorbé en charges électriques, qui sont elles-mêmes converties en signaux électriques, dans lequel la première aire (11) et la seconde aire (12) sont agencées parallèlement côte à côte en contact direct dans ladite direction longitudinale comme une unité d'un seul tenant, ladite première aire (11) ayant un premier degré de résolution transversale (M) et étant adaptée pour des mesures en 3D dudit objet (2), et ladite seconde aire (12) ayant un second degré de résolution transversale (M') et étant adaptée pour des mesures en 2D dudit objet (2), ledit système comprenant en outre une unité de traitement d'image/de signal destinée à analyser et traiter lesdits signaux provenant de la première aire par triangulation en utilisant ladite au moins une source de lumière (4, 5) pour fournir des caractéristiques géométriques tridimensionnelles de l'objet (2), et lesdits signaux provenant de la seconde aire pour fournir des caractéristiques imagées bidimensionnelles dudit objet (2), **caractérisé en ce que** ledit second degré de résolution transversale (M' = M x b) est supérieur (b > 1) audit premier degré de résolution transversale (M).

2. Système selon la revendication 1, **caractérisé en ce qu'**au moins l'une des deux aires (11, 12) est dotée dans son intégralité ou en partie de filtres colorés pour imager l'objet (2) en couleur.

3. Système selon la revendication 1 ou 2, dans lequel la première aire (11) est conçue comme une matrice ayant N lignes et M colonnes, la seconde aire (12) est conçue comme une matrice ayant N' lignes et M' colonnes et M' est b multiplié par M colonnes, où b est un entier supérieur à un.

4. Système selon la revendication 3, dans lequel une intégration à retard de temps (TDI) est utilisée sur la seconde aire (12).

5. Système selon la revendication 1, **caractérisé en ce qu'**au moins une des aires (11, 12) est dotée de filtres pour différentes longueurs d'onde pour minimiser la diaphonie.

6. Système selon l'une quelconque des revendications précédentes, dans lequel le système comprend également un registre de sortie (15) agencé pour lire les charges reçues dans le capteur (10).

7. Système selon l'une quelconque des revendications 1 à 6, dans lequel le système comprend également au moins deux registres de sortie (18a, 18b) agencés pour lire les charges reçues dans le capteur (10).

8. Système selon la revendication 7, dans lequel la première aire (11) et la seconde aire (12) du capteur (10) sont chacune lues sur leur propre registre de sortie (18a, 18b).

9. Système selon la revendication 7, dans lequel si la seconde aire (12) du capteur est dotée de filtres colorés, chaque couleur captée a son propre registre de sortie.

10. Système selon la revendication 6 ou 7, dans lequel le système comprend en outre un convertisseur A/N (16) agencé pour convertir les charges électriques d'un format analogique à numérique et le registre de sortie (15, 18a, 18b) est un registre de sortie numérique.

11. Système selon l'une quelconque des revendications précédentes, dans lequel le système comprend également une unité de traitement d'image/de signal agencée pour analyser les charges électriques.
